# EUROPÄISCHE PATENTSCHRIFT

(11) **EP 2 274 792 B1**
(45) Veröffentlichungstag und Bekanntmachung des Hinweises auf die Patenterteilung: **14.08.2013**
(21) Anmeldenummer: 09735426.0
(22) Anmeldetag: 24.04.2009
(51) Int. Cl.: H01Q 1/12, E04D 1/36, E04D 1/30

(54) **DACHBEFESTIGUNGSSYSTEM**
ROOF FASTENING SYSTEM
SYSTÈME DE FIXATION DE TOIT

(30) Priorität: 25.04.2008 DE 102008021028
(43) Veröffentlichungstag der Anmeldung: 19.01.2011
(73) Patentinhaber: Viessmann Werke GmbH & Co. KG, 35107 Allendorf (DE)
(72) Erfinder: FINGER, Arne, 59939 Olsberg (DE); WENZLER, Sigurd, 35066 Frankenberg (DE)
(74) Vertreter: Wolf, Michael
(86) Internationale Anmeldenummer: PCT/DE2009/000551
(87) Internationale Veröffentlichungsnummer: WO 2009/129799

(56) Entgegenhaltungen:
- DE-A1- 2 949 956
- DE-A1- 3 440 012
- DE-C- 881 964
- DE-U1- 9 317 384
- DE-U1- 20 005 590
- DE-U1- 20 011 709
- DE-U1- 20 102 882
- DE-U1- 29 904 795
- US-A- 4 595 165
- US-A- 5 746 029

## Beschreibung

Die Erfindung betrifft ein Dachbefestigungssystem gemäß dem Oberbegriff des Patentanspruchs 1.

Ein Dachbefestigungssystem der eingangs genannten Art ist nach der US 4,595,165 A bekannt.

Ein weiteres Dachbefestigungssystem ist nach der US 5,746,029 A bekannt. Dieses besteht aus einem aus Dachsparren, Dachlatten und Dachziegeln gebildeten Dach, wobei zur Anordnung eines Aufdachelements (hier eine Parabolantenne) mindestens ein mit dem Dachsparren verbundenes und eine am Dachziegel eingebrachte, mit einer Abdeckung versehene Öffnung durchgreifendes Befestigungselement vorgesehen ist, wobei die Öffnung als nachträglich, beim Dachdecken mit Handwerkzeug eingebrachte Öffnung ausgebildet ist. Ferner ist bei diesem System zwischen dem Dachsparren und den Dachziegeln eine Platte zur Aufnahme einer Schiene angeordnet, die wiederum zur Aufnahme des Befestigungselements ausgebildet ist. Das Befestigungselement besteht bei dieser Lösung aus einer zylindrischen Gewindestange, wobei die Abdeckung der Öffnung aus einem in die Öffnung eingesetzten, die Gewindestange umschließenden Gummipfropfen gebildet ist.

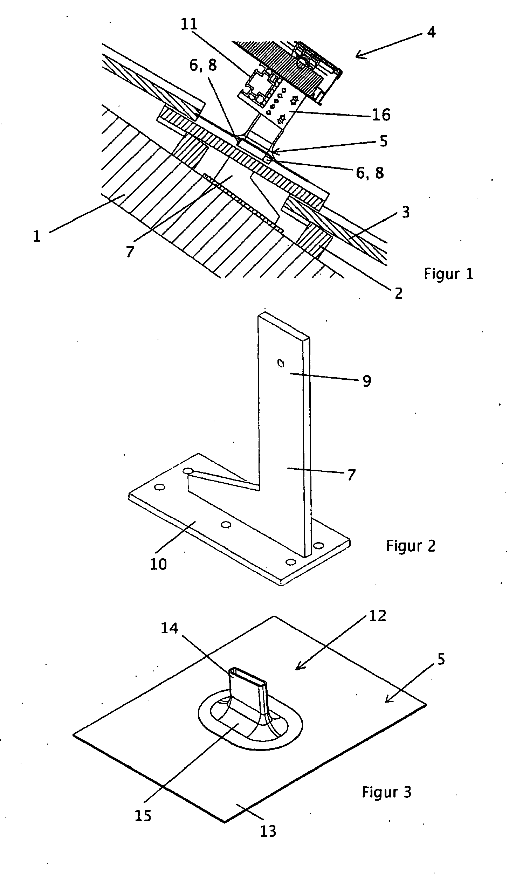

Zwei andere Dachbefestigungssysteme sind ferner aus der DE 10 2005 059 487 A1 bekannt (siehe dort insbesondere Figur 1 und 3). Aus Figur 3 ist dabei ein so genannter Sparrenanker bekannt, bei dem das Befestigungselement durch einen Spalt zwischen zwei Dachziegeln hindurch geführt ist, d. h. bei dieser Lösung wird davon abgesehen, eine Öffnung in den Dachziegel einzubringen. Da in Figur 3 die bei großer Belastung gegebenenfalls auftretenden Hebelkräfte zu einer Beschädigung oder gar Zerstörung des Dachziegels führen können, wird gemäß Figur 1 eine Lösung vorgestellt, bei der an der entsprechenden Stelle der komplette Dachziegel durch ein mit Hilfe so genannter Stockschrauben am Dachsparren befestigtes Austauschelement ersetzt ist, das seinerseits entsprechende Aufnahmen zur Befestigung des Aufdachelements aufweist.

Der Erfindung liegt die Aufgabe zugrunde, ein Dachbefestigungssystem gemäß der US 4,595,165 A zu verbessern.

Insbesondere in Ländern, in denen es viel schneit, hat es sich nämlich gezeigt, dass zum Beispiel Lösungen gemäß Figur 3 der DE 10 2005 059 487 A1 zu einer Vielzahl von zerbrochenen Ziegeln und entsprechenden Folgen führen. Mit Blick auf die alternative Lösung gemäß Figur 1 dieser Schrift besteht die Aufgabe der Erfindung aber auch darin, auf einen aufwändigen Austausch bzw. Ersatz von Dachziegeln verzichten zu können.

Die vorgenannten Aufgaben sind mit einem Dachbefestigungssystem der eingangs genannten Art durch die im Kennzeichen des Patentanspruchs 1 aufgeführten Merkmale gelöst.

Nach der Erfindung ist also vorgesehen, dass die Tülle mit einer leicht an die vorhandene Dachziegelkontur anpassbaren Platte verbunden ist.

Mit anderen Worten ausgedrückt, ist sicher gestellt, dass eine auf das Befestigungselement einwirkende Kraft (Last) nicht an den Dachziegel weitergeleitet und dieser auf diese Weise eventuell beschädigt wird. Bei der Lösung gemäß der US 5,746,029 A ist dies insofern nicht gewährleistet, als die pfropfenartige Abdeckung zu einem unmittelbaren Kraftschluss zwischen dem Befestigungselement und dem Dachziegel führt. Die erfindungsgemäße Maßgabe, nämlich, einen mindestens teilweise fluiden Zwischenraum vorzusehen, unterbindet einen solchen Kraftschluss, wobei "fluid" (im Sinne von flüssig oder gasförmig) insbesondere bedeutet, dass der Zwischenraum nicht wie bei der US 5,746,029 A mit einem festen Körper gefüllt ist. Die Maßgabe "mindestens teilweise" berücksichtigt dabei, dass der Zwischenraum auch mit einer balgartigen Abdeckung, einer zum Beispiel aus Schaumstoff bestehenden Einlage oder dergleichen gefüllt sein könnte, so dass der Dachziegel von einer möglichen Verformung (natürlich innerhalb bestimmter Grenzen) des Befestigungselements unbeeinflusst bleibt.

Der Vollständigkeit halber wird noch auf die weiter abliegende DE 200 05 590 U1 hingewiesen, aus der ein stets an zwei Dachsparren befestigter Dachständer für Antennen bekannt ist. Bei dieser Lösung ist im Gegensatz zur vorliegenden Erfindung zwingend die Verwendung eines so genannten vorgefertigten Dunstrohrziegels mit einer Durchlassöffnung für den Dachständer vorgesehen, d. h. es gibt keine Möglichkeit, im Bereich des Ständers einfach auf einen auch im übrigen verwendeten Dachziegel zurückzugreifen, da ansonsten die Dichtigkeit des Daches in Frage stünde. Diese kann bei der Lösung nach der DE 200 05 590 U1 nur dadurch gewährleistet werden, dass der Dunstrohrziegel einen nach oben weisenden Wulst und eine darüber gestülpte, in der Beschreibung nicht näher erläuterte, prinzipiell aber relativ kleine Tülle aufweist. Insgesamt betrachtet geht außerdem aus der DE 200 05 590 U1 nicht hervor, ob tatsächlich sichergestellt ist, dass vom Dachständer - zum Beispiel über die Tülle oder eine Falschpositionierung des Dachständers zum Dunstrohrziegel - keine Kraft in den Dunstrohrziegel eingeleitet wird und dieser somit vor einer Beschädigung geschützt ist.

Andere vorteilhafte Weiterbildungen des erfindungsgemäßen Dachbefestigungssystems ergeben sich aus den abhängigen Patentansprüchen.

Das erfindungsgemäße Dachbefestigungssystem einschließlich seiner vorteilhaften Weiterbildungen gemäß der abhängigen Patentansprüche wird nachfolgend anhand der zeichnerischen Darstellung eines bevorzugten Ausführungsbeispiels näher erläutert.

Es zeigt
- Figur 1: im Schnitt das erfindungsgemäße Dachbefestigungssystem mit einem Sonnenkollektor (teilweise);
- Figur 2: perspektivisch das aus Träger- und Plattenteil gebildete Befestigungselement; und
- Figur 3: eine bevorzugte Ausführungsform der Abdeckung.

Unabhängig von der konkreten Ausführungsweise umfassen alle erfindungsgemäßen Dachbefestigungssysteme ein aus Dachsparren 1, Dachlatten 2 und Dachziegeln 3 gebildetes Dach, wobei zur Anordnung eines Aufdachelements 4, wie Sonnenkollektor, Parabolantenne oder dergleichen, mindestens ein mit dem Dachsparren 1 verbundenes und eine am Dachziegel 3 eingebrachte, mit einer Abdeckung 5 versehene Öffnung 6 durchgreifendes Befestigungselement 7 vorgesehen ist.

Mit Verweis auf Figur 1 ist für das erfindungsgemäße Dachbefestigungssystem nun vorteilhaft, dass zur Vermeidung einer Krafteinleitung in den Dachziegel 3 im Bereich zwischen der Öffnung 6 und dem Befestigungselement 7 ein mindestens teilweise fluider Zwischenraum 8 vorgesehen ist.

Wie weiter oben schon erläutert, bringt die Maßgabe "mindestens teilweiser fluider Zwischenraum" dabei zum Ausdruck, dass eine Verformung des Befestigungselements 7 keine Krafteinleitung in den Dachziegel 3 zur Folge hat. Etwas konkreter ausgedrückt, könnte man auch sagen, dass das Befestigungselement 7 "kontaktfrei" zum Dachziegel 3 angeordnet ist, wobei mit "kontaktfrei" ein fehlender Kontakt über einen den Zwischenraum vollständig ausfüllenden festen Stoff gemeint ist. Eine balgartige Lösung würde dabei zwar einen gewissen "Kontakt" zwischen dem Befestigungselement 7 und dem Dachziegel 3 herstellen, die Beweglichkeit des Balges verhindert aber eine tatsächliche (relevante) Krafteinleitung und würde letztlich nur zur Abdichtung gegen eindringenden Feuchtigkeit dienen. Die besagte Beweglichkeit des Balges setzt dabei gleichzeitig voraus, dass der Zwischenraum teilweise fluidisch ist, sprich zum Beispiel, was die Regel sein wird, mit Luft gefüllt ist (ähnlich wäre zum Beispiel auch eine Schaumstoffeinlage oder dergleichen). Eine weitere konkrete Ausführungsform besteht also darin, einen Luftspalt zwischen dem Dachziegel und dem Befestigungselement freizuhalten, und zwar insbesondere in Belastungsrichtung, also in der Regel nach schräg unten.

Mit Verweis auf Figur 1 und 2 ist bevorzugt vorgesehen, dass das Befestigungselement 7 einen Trägerteil 9 umfasst, das vorzugsweise mit seiner Hauptachse im wesentlichen senkrecht zum Dachsparren 1 orientiert angeordnet ist. Ferner umfasst das Befestigungselement 7 zur Befestigung auf dem Dachsparren 1 einen Plattenteil 10, wobei der Trägerteil 9 senkrecht am Plattenteil 10 angeordnet ist. Weiterhin ist wahlweise (wie dargestellt) der Trägerteil 9 am Plattenteil 10 befestigt, vorzugsweise angeschweißt, oder (nicht dargestellt) zusammen mit dem Plattenteil 10 einteilig, vorzugsweise als Guss-, insbesondere Druckgussteil, ausgebildet. Außerdem ist das Trägerteil 9 L-förmig ausgebildet und mit seinem kurzen Schenkel am Plattenteil 10 befestigt.

Zur Anbringung des Aufdachelements 4 oder zum Beispiel des Tragprofils 11, das noch erläutert wird, sind am Dachsparren abgewandten Ende des Trägerteils 9 Befestigungselemente wie Schrauben, Löcher oder dergleichen vorgesehen.

Ein besonders stabiles Dachbefestigungssystem ergibt sich ferner dann, wenn zwischen zwei oder mehr auf gleicher horizontaler Höhe angeordneten Befestigungselementen 7 ein diese beiden verbindendes Tragprofil 11 zur Aufnahme des Aufdachelements 4 angeordnet ist. Dieses Tragprofil 11 ist, wie aus Figur 1 ersichtlich, mit einem entsprechend ausgebildeten, vorzugsweise eine Verzahnung (nicht dargestellt) aufweisenden Winkelelement 16 verstellbar am Trägerteil 9 befestigt.

Das Befestigungselement 7 lässt sich besonders stabil am Dach anordnen, wenn am Plattenteil 10 Bohrungen zur Befestigung am Dachsparren 1 vorgesehen sind (siehe Figur 2).

Hinsichtlich einer besonders hohen Stabilität des Befestigungselements 7 ist weiterhin vorgesehen, dass das Trägerteil 9 senkrecht zur Hauptachse des Befestigungselements 7 eine vorzugsweise rechteckige Querschnittsfläche aufweist, die ihr größtes Widerstandsmoment gegen Biegung in Richtung des Dachsparrens 1 aufweist. Wie aus Figur 1 und 2 ersichtlich ist eine Biegung in Verlaufsrichtung des Dachsparrens 1 durch diese Vorgabe praktisch ausgeschlossen, d. h. das erfindungsgemäße Dachbefestigungssystem weist in Hauptbelastungsrichtung offensichtlich eine hohe Stabilität auf.

Die Montage des erfindungsgemäßen Dachbefestigungssystems wird, wie folgt, vorgenommen:
Zunächst einmal erstellt der Dachdecker aus den Dachsparren 1 und den Dachlatten den Dachstuhl des betreffenden Hauses. An den Stellen, wo später zum Beispiel der Sonnenkollektor ange-ordnet sein soll, werden die Befestigungselemente 7 am Dachsparren 1 angeschraubt. Gleich darauf können die Dachziegel 3 in gewohnter Weise auf die Dachlatten 2 aufgelegt bzw. gehangt werden. An den Stellen, wo sich die Befestigungselemente 7 befinden, wird einfach aus einem Dachziegel 3 eine entsprechende Öffnung 6 zum Beispiel mit einer Flex herausgeschnitten, wobei natürlich darauf zu achten ist, dass rund um das Befestigungselement 7 der erfindungsgemäße Luftspalt (Zwischenraum 8) zum Rand der Öffnung 6 verbleibt, um eine Krafteinleitung vom Befestigungselement 7 in den Dachziegel 3 sicher auszuschließen.

Die Abdeckung 5 ist ein weiteres wesentliches Element der Erfindung. Wie aus Figur 1 und 3 ersichtlich umfasst diese eine das Befestigungselement 7 dicht umschließende Tülle 12, wobei diese aus einem elastischen Material wie Gummi gebildet ist. Weiterhin ist mit Verweis auf Figur 3 besonders bevorzugt vorgesehen, dass die Tülle 12 an eine Platte 13 (zum Beispiel aus metallischem Material, vorzugsweise Blei, oder auch Kunststoff) angespritzt ausgebildet ist. Diese Maßgabe gibt die Möglichkeit, die Platte 13 nach dem Überstülpen der Tülle 12 über das Befestigungselement 7 bzw. den Trägerteil 9 genau an die Kontur der Dachziegel 3 anzuformen, wobei alternativ (nicht dargestellt) auch vorgesehen sein kann, sowohl die Tülle 12 als auch die Platte 13 aus einem elastischen Material wie Gummi zu bilden, wobei dann die Platte 13 zur Anpassung an die Dachziegel 3 vorzugsweise eine plastisch verformbare Verstärkungseinlage aufweist.

Ferner ist vorteilhaft vorgesehen, dass die Tülle 12 und/oder die Platte 13 farblich an die Dachziegel 3 angepasst, UV-lichtbeständig und/oder wetterbeständig ausgebildet sind.

Weiterhin wichtig ist, dass die Platte 13 zur Abdeckung von Schlitzen zwischen den Dachziegeln 3 flächenmäßig größer als ein einzelner Dachziegel 3 ausgebildet ist (dies verbessert die Variabilität in Bezug auf die tatsächliche Positionierung der Öffnung 6 zum Dachziegel 3) und dass die Tülle 12 einen das Trägerteil 9 dicht umfassenden Tüllenrand 14 (vorzugsweise aus Gummi, so dass kein Wasser vom oberhalb des Dachziegels 3 befindlichen Teil des Trägerteils 9 in den unterhalb der Abdeckung 5 befindlichen Teil gelangen kann) und einen gerundet auslaufenden Übergangsbereich 15 (ebenfalls aus Gummi) zur Platte 13 aufweist. Diese Ausbildung führt, sobald die Dachziegel 3 verlegt sind, zu einer sehr einfach aufzusetzenden Abdeckung, die einerseits natürlich dicht, andererseits aber auch leicht an die vorhandene Dachziegelkontur anpassbar ausgebildet ist und somit für einen dichten Abschluss sorgt, wobei schließlich ergänzend (nicht dargestellt) an der Platte 13 dachziegelseitig ein Dichtmittel, wie zum Beispiel ein Dichtband, angeordnet sein kann.

### Bezugszeichenliste

- 1: Dachsparren
- 2: Dachlatte
- 3: Dachziegel
- 4: Aufdachelement
- 5: Abdeckung
- 6: Öffnung
- 7: Befestigungselement
- 8: Zwischenraum
- 9: Trägerteil
- 10: Plattenteil
- 11: Tragprofil
- 12: Tülle
- 13: Platte
- 14: Tüllenrand
- 15: Übergangsbereich
- 16: Winkelelement

## Patentansprüche

1. Dachbefestigungssystem, umfassend
ein aus Dachsparren (1), Dachlatten (2) und Dachziegeln (3) gebildetes Dach,
wobei zur Anordnung eines Aufdachelements (4), wie Sonnenkollektor, Parabolantenne oder dergleichen, mindestens ein mit dem Dachsparren (1) verbundenes und eine am Dachziegel (3) eingebrachte, mit einer Abdeckung (5) versehene Öffnung durchgreifendes Befestigungselement (7) vorgesehen ist,
wobei zur Vermeidung einer Krafteinleitung in den Dachziegel (3) im Bereich zwischen der Öffnung (6) und dem Befestigungselement (7) ein Zwischenraum (8) vorgesehen ist,
wobei die Abdeckung (5) eine das Befestigungselement (7) dicht umschließende, auf die Dachziegel (3) aufzusetzende Tülle (12) umfasst,
**dadurch gekennzeichnet,**
**dass** das Dachbefestigungssystem ferner eine Platte (13) umfasst, welche mit der Tülle (12) verbunden und an die vorhandene Dachziegelkontur anpassbar ist, so dass sie für einen dichten Abschluss mit dem Dachziegel (3) sorgt.

2. Dachbefestigungssystem nach Anspruch 1,
**dadurch gekennzeichnet,**
**dass** das Befestigungselement (7) einen Trägerteil (9) umfasst, das vorzugsweise mit seiner Hauptachse im wesentlichen senkrecht zum Dachsparren (1) orientiert angeordnet ist.

3. Dachbefestigungssystem nach Anspruch 1 oder 2,
**dadurch gekennzeichnet,**
**dass** das Befestigungselement (7) zur Befestigung auf dem Dachsparren (1) einen Plattenteil (10) umfasst.

4. Dachbefestigungssystem nach Anspruch 2 und 3,
**dadurch gekennzeichnet,**
**dass** der Trägerteil (9) senkrecht am Plattenteil (10) angeordnet ist.

5. Dachbefestigungssystem nach Anspruch 3 oder 4,
**dadurch gekennzeichnet,**
**dass** wahlweise der Trägerteil (9) am Plattenteil (10) befestigt, vorzugsweise angeschweißt, oder zusammen mit dem Plattenteil (10) einteilig, vorzugsweise als Guss-, insbesondere Druckgussteil, ausgebildet ist

6. Dachbefestigungssystem nach einem der Ansprüche 2 bis 5,
**dadurch gekennzeichnet,**
**dass** am Dachsparren abgewandten Ende des Trägerteils (9) Befestigungselemente wie Schrauben, Löcher, Verzahnungen oder dergleichen zur Anbringung des Aufdachelements (4) oder dergleichen vorgesehen sind.

7. Dachbefestigungssystem nach einem der Ansprüche 3 bis 6,
**dadurch gekennzeichnet,**
**dass** am Plattenteil (10) Bohrungen zur Befestigung am Dachsparren (1) vorgesehen sind.

8. Dachbefestigungssystem nach einem der Ansprüche 1 bis 7,
**dadurch gekennzeichnet,**
**dass** der Zwischenraum (8), vorzugsweise ausschließlich, mit Luft gefüllt ist.

9. Dachbefestigungssystem nach einem der Ansprüche 1 bis 8,
**dadurch gekennzeichnet,**
**dass** die Tülle (12) aus einem elastischen Material wie Gummi gebildet ist.

10. Dachbefestigungssystem nach einem der Ansprüche 1 bis 9,
**dadurch gekennzeichnet,**
**dass** die vorzugsweise aus metallischem Material, insbesondere Blei, gebildete und mit der Tülle (12) verbundene Platte (13) an die Tülle (12) angespritzt ausgebildet ist.

11. Dachbefestigungssystem nach einem der Ansprüche 1 bis 10,
**dadurch gekennzeichnet,**
**dass** sowohl die Tülle (12) als auch die Platte (13) aus einem elastischen Material wie Gummi gebildet sind, wobei die Platte (13) zur Anpassung an die Dachziegel (3) vorzugsweise eine plastisch verförmbare Verstärkungseinlage aufweist.

12. Dachbefestigungssystem nach einem der Ansprüche 1 bis 11,
**dadurch gekennzeichnet,**
**dass** wahlweise die Tülle (12) und/oder die Platte (13) farblich an die Dachziegel (3) angepasst, UV-lichtbeständig und/oder wetterbeständig ausgebildet sind.

13. Dachbefestigungssystem nach einem der Ansprüche 1 bis 12,
**dadurch gekennzeichnet,**
**dass** die Platte (13) zur Abdeckung von Schlitzen zwischen den Dachziegeln (3) größer als ein einzelner Dachziegel (3) ausgebildet und dachziegelseitig vorzugsweise mit einem Dichtmittel versehen ist.

14. Dachbefestigungssystem nach einem der Ansprüche 2 bis 13,
**dadurch gekennzeichnet,**
**dass** die Tülle (12) einen das Trägerteil (9) dicht umfassenden Tüllenrand (14) und einen gerundet auslaufenden Übergangsbereich (15) zur Platte (13) aufweist.

## Claims

1. A roof fastening system, comprising
a roof that is composed of rafters (1), roof battens (2) and roofing tiles (3), wherein at least one fastening element (7) is provided for mounting a rooftop element (4) such as a solar collector, a parabolic antenna or the like, with said fastening element being connected to the rafter (1) and penetrating an opening that is produced in the roofing tile (3) and provided with a cover (5), wherein an intermediate space (8) is provided in the zone between the opening (6) and the fastening element (7) in order to prevent a force from being transmitted into the roofing tile (3), and wherein the cover (5) comprises a grommet (12) that tightly encloses the fastening element (7) and is attached to the roofing tile (3),
**c h a r a c t e r i z e d i n**
that the roof fastening system furthermore comprises a panel (13) that is connected to the grommet (12) and can be adapted to the existing roofing tile contour such that it ensures a tight seal with the roofing tile (3).

2. The roof fastening system according to Claim 1,
**characterized** i n
that the fastening element (7) comprises a carrier section (9) that preferably is arranged such that its principal axis is essentially oriented perpendicular to the rafter (1).

3. The roof fastening system according to Claim 1 or 2,
**characterized in**
**that** the fastening element (7) comprises a panel section (10) for being fastened on the rafter (1).

4. The roof fastening system according to Claim 2 and 3,
**characterized in**
**that** the carrier section (9) is arranged perpendicular to the panel section (10).

5. The roof fastening system according to Claim 3 or 4,
**characterized in**
**that** the carrier section (9) is selectively fastened, preferably welded, to the panel section (10) or realized integrally with the panel section (10), preferably in the form of a casting, particularly a die-casting.

6. The roof fastening system according to one of Claims 2 to 5,
**characterized in**
**that** fastening elements such as screws, holes, teeth or the like for mounting the rooftop element (4) or the like are provided on the end of the carrier section (9) that faces away from the rafter.

7. The roof fastening system according to one of Claims 3 to 6,
**characterized in**
**that** the panel section (10) is provided with bores for being fastened on the rafter (1).

8. The roof fastening system according to one of Claims 1 to 7,
**characterized in**
**that** the intermediate space (8) preferably is filled with air only.

9. The roof fastening system according to one of Claims 1 to 8,
**characterized in**
**that** the grommet (12) consists of an elastic material such as rubber.

10. The roof fastening system according to one of Claims 1 to 9,
**characterized in**
**that** the panel (13) preferably consists of a metallic material, particularly lead, and is connected to the grommet (12), wherein said panel is realized such that it is injection-moulded onto the grommet (12).

11. The roof fastening system according to one of Claims 1 to 10,
**characterized in**
**that** the grommet (12), as well as the panel (13), consists of an elastic material such as rubber, wherein the panel (13) preferably features a reinforcing layer that can be plastically deformed in order to be adapted to the roofing tile (3).

12. The roof fastening system according to one of Claims 1 to 11,
**characterized in**
**that** the grommet (12) and/or the panel (13) is selectively adapted to the roofing tile (3) with respect to its color and realized in a UV-resistant and/or weather-resistant fashion.

13. The roof fastening system according to one of Claims 1 to 12,
**characterized in**
**that** the panel (13) is realized larger than one individual roofing tile (3) in order to cover slots between the roofing tiles (3) and preferably provided with a sealing means on the side of the roofing tile.

14. The roof fastening system according to one of Claims 2 to 13,
**characterized in**
**that** the grommet (12) features a grommet edge (14) that tightly encloses the carrier section (9) and a rounded transition zone (15) toward the panel (13).

## Revendications

1. Système de fixation de toit, comprenant
un toit formé de chevrons de toit (1), de voliges (2) et de tuiles de toit (3) sachant que pour agencer un élément sur toit (4) comme un panneau solaire, une antenne parabolique ou similaire, il est prévu au moins un élément de fixation (7) relié au chevron de toit (1) et mettant en prise une ouverture dotée d'un couvercle (5) pratiquée sur la tuile de toit (3), sachant que pour éviter une introduction de force dans la tuile de toit (3) au niveau entre les ouvertures et l'élément de fixation (7), un espace intermédiaire (8) est prévu, sachant que le couvercle (5) comprend une douille (12) entourant l'élément de fixation (7) de manière étanche, à placer sur la tuile de toit (3), **caractérisé en ce que**
le système de fixation de toit comprend en outre une plaque (13) qui est reliée à la douille (12) et peut être adaptée au contour de tuile de toit présent, de sorte qu'elle veille à une connexion étanche avec la tuile de toit (3).

2. Système de fixation de toit selon la revendication 1,
**caractérisé en ce que**
l'élément de fixation (7) comprend une partie porteuse (9) qui est agencée de préférence avec son axe principal orienté essentiellement verticalement au chevron de toit (1).

3. Système de fixation de toit selon la revendication 1 ou 2,
**caractérisé en ce que**
l'élément de fixation (7) comprend une partie de plaque (10) pour la fixation sur le chevron de toit (1).

4. Système de fixation de toit selon les revendications 2 et 3,
**caractérisé en ce que**
la partie porteuse (9) est disposée verticalement sur la partie de plaque (10).

5. Système de fixation de toit selon la revendication 3 ou 4,
**caractérisé en ce que**
la partie porteuse (9) peut au choix être disposée, de préférence soudée, sur la partie de plaque (10) ou être formée d'un seul tenant avec la partie de plaque (10), de préférence en tant que pièce coulée, en particulier coulée sous pression.

6. Système de fixation de toit selon l'une des revendications 2 à 5,
**caractérisé en ce que**
sur l'extrémité de la partie porteuse (9) détournée du chevron de toit, des éléments de fixation comme des vis, des trous, des dentures ou similaires sont prévus pour appliquer l'élément sur toit (4) ou similaire.

7. Système de fixation de toit selon l'une des revendications 3 à 6,
**caractérisé en ce que**
des perçages sont prévus sur la partie de plaque (10) pour la fixation sur le chevron de toit (1).

8. Système de fixation de toit selon l'une des revendications 1 à 7,
**caractérisé en ce que**
l'espace intermédiaire (8) est rempli d'air, exclusivement de préférence.

9. Système de fixation de toit selon l'une des revendications 1 à 8,
**caractérisé en ce que**
la douille (12) est fabriquée dans un matériau élastique comme le caoutchouc.

10. Système de fixation de toit selon l'une des revendications 1 à 9,
**caractérisé en ce que**
la plaque (13) fabriquée de préférence en matériau métallique, en particulier du plomb, et reliée à la douille (12), est formée en étant injectée sur la douille (12).

11. Système de fixation de toit selon l'une des revendications 1 à 10,
**caractérisé en ce que**
tant la douille (12) que la plaque (13) sont fabriquées dans un matériau élastique comme du caoutchouc, sachant que la plaque (13) présente de préférence un insert de renfort à déformation plastique pour l'adaptation sur la tuile de toit (3).

12. Système de fixation de toit selon l'une des revendications 1 à 11,
**caractérisé en ce qu'**
au choix la douille (12) et/ou la plaque (13), est/sont adaptée(s) à la couleur de la tuile de toit (3), résistante(s) aux UV et/ou aux intempéries.

13. Système de fixation de toit selon l'une des revendications 1 à 12,
**caractérisé en ce que**
la plaque (13) est conçue plus grande qu'une seule tuile de toit (3) pour recouvrir des fentes entre les tuiles de toit (3) et est dotée de préférence d'un moyen d'étanchéité côté tuile.

14. Système de fixation de toit selon l'une des revendications 2 à 13,
**caractérisé en ce que**
la douille (12) présente un bord de douille (14) entourant la partie porteuse (9) de manière étanche et une zone de transition (15) vers la plaque (13) qui part en arrondi.
